Europäisches Patentamt

European Patent Office

Office européen des brevets

(19)

(11) Publication number: **0 262 783**
**A2**

(12)

# EUROPEAN PATENT APPLICATION

(21) Application number: **87307417.3**

(22) Date of filing: **21.08.87**

(51) Int. Cl.⁴: **C08L 23/04** , **C08L 27/16** ,
**//(C08L23/04,27:16)**

(30) Priority: **29.08.86 US 901698**

(43) Date of publication of application:
**06.04.88 Bulletin 88/14**

(84) Designated Contracting States:
**AT BE DE FR GB IT NL SE**

(71) Applicant: **MOBIL OIL CORPORATION**
**150 East 42nd Street**
**New York New York 10017(US)**

(72) Inventor: **Chu, Shaw Chang**
**107 Monroe Avenue**
**Belle Mead New Jersey 08502(US)**
Inventor: **Shaw, Richard Gregg**
**R.D. No. 1, Box 98**
**Remsen New York 13438(US)**

(74) Representative: **Colmer, Stephen Gary**
**Patent Department c/o Mobil Services**
**Company Limited Mobil Court 3 Clements**
**Inn**
**London WC2A 2EB(GB)**

(54) **Extrudable blends of polyethylene and films thereof.**

(57) The extrudability of linear polymers of ethylene such as low density copolymers of ethylene and $C_4$ to $C_{10}$ olefins (LLDPE) into thin films is improved by adding small amounts, e.g., 0.02 to 2 weight percent poly-vinylidene fluoride to reduce melt fracture, head pressure and to obtain films having excellent anti-blocking characteristics.

EP 0 262 783 A2

## EXTRUDABLE BLENDS OF POLYETHYLENE AND FILMS THEREOF

Linear ethylene polymers such as linear low density polyethylenes (LLDPE) are widely used in the extrusion of films because of their superior properties when compared with high pressure polyethylene (LDPE). However, there are persistent problems in the commercial exploitation of LLDPE resins due to difficulties in extrusion. For example, high back pressure and torque due to extremely high shear viscosity of the linear ethylene polymer are encountered. Furthermore, the extruded films exhibit surface distortion related to melt fracture. Accordingly, much effort has been devoted to finding additives, modifying extrusion conditions and changing die materials in order to alleviate some of the problems. For example, U.S. Patent 3,125,547 discloses the use of, inter alia, hexfluoropropylene-vinylidene fluoride copolymer as a film processing aid.

This invention relates to the use of a semicrystalline polymer of vinylidene fluoride, for example, polyvinylidene fluoride, which improves the extrusion characteristics of linear ethylene polymers by reducing melt fracture and head pressure, and results in a film thereof having excellent anti-blocking characteristics.

According to the present invention, there is provided a composition which comprises (i) a linear ethylene polymer and (ii) a semicrystalline polymer of vinylidene fluoride.

The linear ethylene polymers (i) which are suitable for use in this invention are known materials which are widely commercially available. The preparation of suitable polymers is described in U.S. Patent 4,076,698. Suitable polymers are generally prepared under low pressure conditions using Ziegler-Natta catalysts or chromium oxide catalysts. The linear polymers are either homopolymers of ethylene or copolymers of ethylene and alpha-olefins containing from 4 to 10 carbon atoms such as butene, hexene or octene. This invention is particularly concerned with linear low density polyethylenes which are copolymers as aforesaid and having a density between 0.90 and 0.94, preferably between 0.91 and 0.93.

The semicrystalline polymer of vinylidene fluoride (ii) is preferably polyvinylidene fluoride homopolymer and should have melt flow characteristics similar to that of the linear polyethylene polymer so that it can be easily dispersed in the polyethylene. The weight average molecular weight of (ii) should be in the range of 20,000 to 1,000,000, preferably between 40,000 to 500,000. Desirably, (ii) should be present in an amount from 0.02 to 2 percent by weight.

The semicrystalline polymer (ii) can be blended with the linear ethylene polymer in any suitable manner. It has been found to be advantageous to prepare a masterbatch containing the linear ethylene polymer (i) which is rich in the semicrystalline polymer (ii) for blending with additional ethylene polymer to achieve the desired concentration of the additives.

This invention also provides an extruded film comprising a composition as herein defined.

The following non-limiting Examples illustrate the invention.

## EXAMPLES 1 to 6

The linear low density polyethylene (LLDPE) used in all of the Examples was an ethylene-butene copolymer having a density of 0.918 and a melt index of 1 which exhibits severe melt fracture under commercial narrow die gap extrusion conditions. The polyvinylidene fluoride used in the examples had a weight average molecular weight of about 50,000 (Kynar 720 obtained from the Pennwalt Corporation). The hexafluoropropylene-vinylidene fluoride polymer used in the control examples was Viton A from E.I. du Pont de Nemours and Company.

Blocking force of the films containing various amounts of the fluoropolymer was measured according to the ASTM method (D-3354) on five samples of each film, averaged and reported in the Table below.

## TABLE

| Example | Wt. % | Grams Blocking Force (KYNAR) | (Control) Grams Blocking Force (VITON A) |
|---|---|---|---|
| 1 | 2.0 | 27.9 | 94.7 |
| 2 | 1.0 | 55.9 | 101 |
| 3 | 0.5 | 85.5 | 108 |
| 4 | .25 | 115 | 120 |
| 5 | 0.1 | 119 | 130 |
| 6 | 0.04 | 130 | 133 |

All samples exhibited the absence of melt fracture which is obtained when the same polymer is extruded under the same conditions without fluorocarbon polymer but the Kynar (polyvinylidene fluoride) examples give films having less blocking than the Viton counterparts.

("KYNAR" and "VITON" are registered Trademarks.)

## Claims

1. A composition which comprises (i) a linear ethylene polymer and (ii) a semicrystalline polymer of vinylidene fluoride

2. A composition according to claim 1 in which (i) is a copolymer of ethylene and an alpha-olefin containing from 4 to 10 carbon atoms.

3. A composition according to claim 1 or 2 in which (i) is a copolymer of ethylene and butene, hexene or octene.

4. A composition according to any preceding claim in which (i) has a density from 0.90 to 0.94.

5. A composition according to any preceding claim in which (ii) has a weight average molecular weight from 20,000 to 1,000,000.

6. A composition according to any preceding claim in which (ii) is present in an amount from 0.02 to 2 percent by weight.

7. An extruded film comprising a composition according to any preceding claim.